# EUROPÄISCHE PATENTSCHRIFT

(11) **EP 3 541 686 B1**
(45) Veröffentlichungstag und Bekanntmachung des Hinweises auf die Patenterteilung: **28.04.2021**
(21) Anmeldenummer: 17801422.1
(22) Anmeldetag: 14.11.2017
(51) Int. Cl.: B60K 17/04, B62D 5/04, B60K 17/30

(54) **RADAUFHÄNGUNGSVORRICHTUNG MIT EINZELRADLENKUNG FÜR EIN KRAFTFAHRZEUG MIT ANTRIEB DER GELENKTEN RÄDER**
WHEEL SUSPENSION DEVICE HAVING SINGLE-WHEEL STEERING FOR A MOTOR VEHICLE WITH DRIVING OF THE STEERED WHEELS
DISPOSITIF DE SUSPENSION DE ROUE À DIRECTION INDÉPENDANTE POUR UN VÉHICULE À MOTEUR À ENTRAÎNEMENT DES ROUES DIRECTRICES

(30) Priorität: 15.11.2016 DE 102016222434
(43) Veröffentlichungstag der Anmeldung: 25.09.2019
(73) Patentinhaber: thyssenkrupp Presta AG, 9492 Eschen (LI); thyssenkrupp AG, 45143 Essen (DE)
(72) Erfinder: ALTHAUS, Josef, 87538 Fischen (DE); MURKOVIC, Kristian, 7320 Sargans (CH); MARTIN, Björn-Bruce, 9008 St. Gallen (CH)
(74) Vertreter: thyssenkrupp Intellectual Property GmbH
(86) Internationale Anmeldenummer: PCT/EP2017/079118
(87) Internationale Veröffentlichungsnummer: WO 2018/091429

(56) Entgegenhaltungen:
- EP-A2- 1 484 233
- WO-A1-2009/118084
- WO-A1-2015/144482
- JP-A- S60 179 332
- US-A- 2 306 958

## Beschreibung

Die Erfindung betrifft eine Radaufhängungsvorrichtung mit einer Einzelradlenkung für ein Kraftfahrzeug mit Antrieb der gelenkten Räder, mit einem am Fahrzeugchassis federnd aufgehängten Achsschenkel zur drehbaren Lagerung eines Fahrzeugrades, wobei der Achsschenkel mittels der Einzelradlenkung um eine Schwenkachse schwenkbar ist, wobei die Einzelradlenkung ein Schneckengetriebe mit einem am Achsschenkel drehfest und koaxial zur Schwenkachse angeordneten Schneckenrad aufweist, das mit einer Schnecke in Eingriff steht, mittels der das Schneckenrad um die Schwenkachse drehbar ist und die über eine als Gelenkwelle ausgestaltete Lenkantriebswelle durch einen am Fahrzeugchassis angeordneten Lenkmotor antreibbar ist, wobei das gelenkte Fahrzeugrad mit einem Antrieb gekoppelt ist, wobei der Antrieb mittels einer als Gelenkwelle ausgestalteten Radantriebswelle erfolgt, wobei wirkungsmäßig zwischen der Radantriebswelle und einer angetriebenen Radachswelle des Fahrzeugrades ein doppeltes Kegelradgetriebe angeordnet ist.

Bei Einzelradlenkungen, die auch als Steer-by-Wire Lenksysteme bekannt sind, können die lenkbaren Räder des Kraftfahrzeugs unabhängig voneinander verschwenkt werden. Ein vom Fahrer über das Lenkrad vorgegebener Lenkbefehl wird dabei mittels eines Sensors detektiert und anschließend in eine elektronische Steuereinheit (ECU) weitergeleitet, die in Abhängigkeit von Lenkmoment und Lenkwinkel Stellmotoren der Einzelradlenkungen ansteuert und dadurch die lenkbaren Räder gemäß dem Wunsch des Fahrers verschwenkt.

Aus der DE 10 2008 039 547 A1 ist eine Einzelradlenkung bekannt, die allerdings einen komplizierten und bauraumintensiven Aufbau aufweist.

Eine zum Antrieb des gelenkten Rades dienende Antriebswelle ist als Gelenkwelle ausgestaltet und mit dem lenkbaren Rad über ein Gleichlaufgelenk verbunden. Dadurch wird der maximale Lenkwinkel auf etwa 40° begrenzt.

Aus der KR 10 2011 005 286 0 ist ebenfalls eine Einzelradlenkung bekannt, bei der die gelenkten Räder mittels Linearantrieben und über aufwändige Umlenkelemente mit Spurstangen verschwenkbar sind. Die Ansteuerung mit Linearantrieben ist aufwändig. Auch diese bekannte Einzelradlenkung erlaubt nur Lenkwinkel von etwa 40°.

Aus der WO 2015/144482 A1, WO 2009/118084 A1 oder EP 1 484 233 A2 sind gattungsgemäße Radaufhängungsvorrichtungen bekannt. Diese sind aufwendig aufgebaut und erfordern einen relativ großen Bauraum.

Aufgabe der Erfindung ist es, eine Einzelradlenkung der eingangs genannten Art bereitzustellen, die einfach und raumsparend aufgebaut ist und große Lenkwinkel ermöglicht.

Gelöst wird die Aufgabe durch die Merkmale des Patentanspruchs 1, vorteilhafte Weiterbildungen ergeben sich aus den Unteransprüchen.

Die erfindungsgemäße Lösung sieht vor, dass das Kegelradgetriebe und die Schnecke in einem Gehäuse angeordnet sind, das gegenüber der Schwenkachse unverschwenkbar ist und mit dem Achsschenkel in Richtung der Schwenkachse federnd aufgehängt ist.

Um die genannten Bauteile in korrekter Position zueinander zu fixieren und drehbar zu lagern, wird vorgeschlagen, dass das Kegelradgetriebe und die Schnecke in einem mit dem Achsschenkel verbundenen Gehäuse angeordnet ist, das gegenüber der Schwenkachse nicht schwenkbar, aber mit dem Achsschenkel in Richtung der Schwenkachse federnd aufgehängt ist. Dadurch kann das Gehäuse mit der Schnecke der Einfederungsbewegung folgen und die Schnecke kann ein Drehmoment am Schneckenrad erzeugen.

Das erfindungsgemäße Schneckenradgetriebe hat den Vorteil, dass das Schneckenrad über einen wesentlich größeren Winkelbereich gedreht werden kann, was größere Lenkeinschläge des gelenkten Fahrzeugrades ermöglicht als eine Verschwenkung mittels Spurstange. Dabei ist der Lenkmotor am Fahrzeugchassis angeordnet und trägt daher nicht zu den ungefederten Massen am Fahrzeugrad bei. Um ein Einfedern des gelenkten Rades zu ermöglichen ist zwischen der Schnecke und dem Lenkmotor eine als Gelenkwelle ausgestaltete Lenkantriebswelle vorgesehen. Vorzugsweise ist der Lenkmotor ein Elektromotor, weil dieser sich besonders einfach mittels einer Steuereinheit (ECU) ansteuern lässt. Es kann aber auch ein anderer Motor verwendet werden, beispielsweise ein hydraulischer Motor.

In einer vorteilhaften Ausführungsform ist das Schneckenrad als Schneckenradsegment ausgestaltet. In einer vorteilhaften Weiterbildung erstreckt sich das als Schneckenradsegment ausgebildete Schneckenrad über einen Umfangsbereich zwischen 180° und 270°, besonders bevorzugt zwischen 190° bis 200°. Bevorzugt ist das gelenkte Fahrzeugrad aus seiner Neutralstellung bei Geradeausfahrt des Kraftfahrzeugs um -70° bis +90° verschwenkbar. Diese Ausführungsform gewährleistet einen großen Schwenkbereich des gelenkten Fahrzeugrades bei reduziertem Gewicht des zu der ungefederten Masse beitragenden Schneckenrades und einem geringeren Bauraumbedarf, weil Teile des Schneckenrades, die zum Verschwenken des gelenkten Rades nicht erforderlich sind, weggelassen wurden.

In weiterer vorteilhafter Ausgestaltung der Erfindung ist das gelenkte Fahrzeugrad mit einem Antrieb gekoppelt, wobei der Antrieb mittels einer als Gelenkwelle ausgestalteten Radantriebswelle, wobei wirkungsmäßig zwischen der Radantriebswelle und einer angetriebenen Radachswelle des Fahrzeugrades ein doppeltes Kegelradgetriebe angeordnet ist. Bei dieser Ausführungsform dient die als Gelenkwelle ausgestaltete Radantriebswelle allein zum Ausgleich der Einfederungsbewegung des gelenkten Fahrzeugrades, während die Schwenkbewegung durch das doppelte Kegelradgetriebe ermöglicht wird, welches bezüglich des maximalen Lenkwinkels nicht den Einschränkungen einer Gelenkwelle unterliegt. Dadurch können auch bei großen Lenkwinkeln von -70° bis +90° über das doppelte Kegelradgetriebe Antriebsmomente auf das angetriebene Fahrzeugrad übertragen werden.

Eine weitere vorteilhafte Ausgestaltung der Erfindung sieht vor, dass das doppelte Kegelradgetriebe zwei drehfest miteinander verbundene, am Achsschenkel koaxial zur Schwenkachse drehbar gelagerte Kegelräder aufweist, von denen ein oberes Kegelrad mit einem mit der Radantriebswelle drehfest verbundenen inneren Kegelrad in Eingriff steht und ein unteres Kegelrad mit einem mit der angetriebenen Radachswelle drehfest verbundenen äußeren Kegelrad in Eingriff steht, so dass ein Antriebsmoment von der Radantriebswelle über das innere Kegelrad auf das obere Kegelrad von diesem auf das untere Kegelrad und von Letzterem auf das äußere Kegelrad und die Radachswelle übertragbar ist. Diese Ausführungsform des Kegelradgetriebes ist kompakt und einfach ausgestaltet.

Zur Vervollständigung der gefederten Aufhängung des gelenkten und angetriebenen Fahrzeugrades wird empfohlen, dass das Gehäuse an seiner Unterseite mittels eines Querlenkers am Fahrzeugchassis angelenkt ist.

Ein Ausführungsbeispiel der Erfindung wird nachfolgend anhand der Zeichnungen näher erläutert. Die Figuren zeigen im Einzelnen:
Figur 1: eine Prinzipskizze einer Einzelradlenkung mit einer erfindungsgemäßen Radaufhängungsvorrichtung in perspektivischer Darstellung;
Figur 2: eine erfindungsgemäße Radaufhängungsvorrichtung mit Fahrzeugrad in perspektivischer Darstellung;
Figur 3: die Radaufhängungsvorrichtung von Figur 2 ohne Fahrzeugrad;
Figur 4: die erfindungsgemäße Radaufhängungsvorrichtung von Figur 3 ohne Gehäuseteile zur Veranschaulichung ihrer Funktion;
Figur 5: eine Radaufhängungsvorrichtung gemäß Figur 3, aber aus einem anderen Blickwinkel;
Figur 6: eine Radaufhängungsvorrichtung gemäß Figur 4, aber aus einem anderen Blickwinkel.

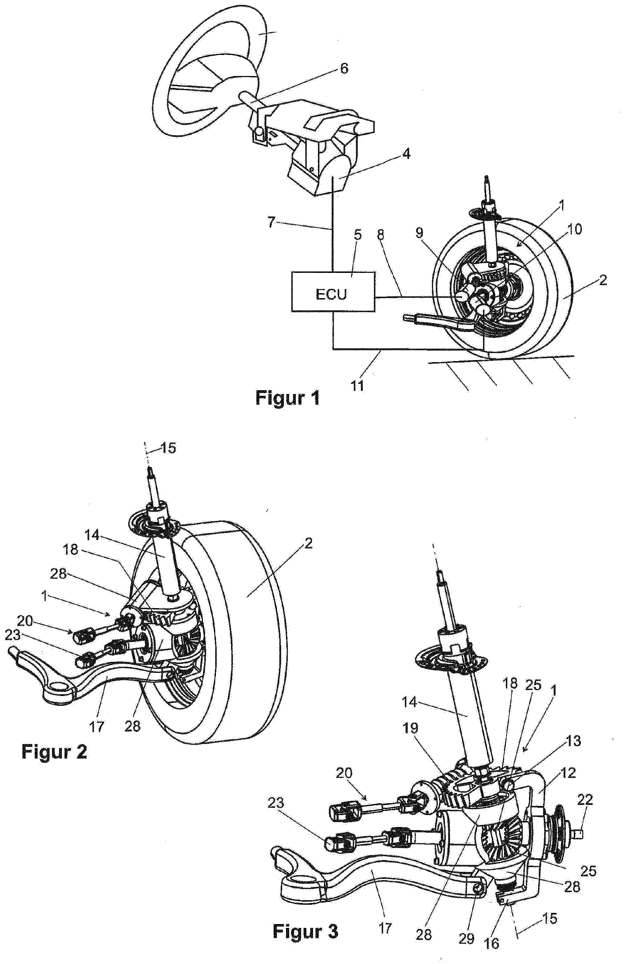

Figur 1 zeigt ein Steer-by-Wire Lenksystem zur Einzelradlenkung eines gelenkten und angetriebenen Fahrzeugrades 2, welches mittels einer erfindungsgemäßen Radaufhängungsvorrichtung 1 am nicht gezeigten Fahrzeugchassis befestigt ist. Der Lenkbefehl des Fahrers wird mechanisch über ein Lenkrad 4 und eine Gelenkwelle 6 in eine Sensoreinheit 4 übertragen. Die Sensoreinheit 4 detektiert den vom Fahrer vorgegebenen Lenkwinkel und das Lenkmoment und erzeugt daraus Steuersignale, die über eine Signalleitung 7 an eine elektronische Steuereinheit 5 (Electronic Control Unit ECU) weitergeleitet werden. Die elektronische Steuereinheit 5 steuert über eine elektrische Steuerleitung 8 einen als Elektromotor ausgestalteten Lenkmotor 9 an, der das Fahrzeugrad 2 entsprechend den Vorgaben des Fahrers verschwenkt. Ein Lenkmomentsensor 10 der Radaufhängungsvorrichtung 1 ermittelt das tatsächlich am Fahrzeugrad 2 auftretende Lenkmoment und übermittelt ein entsprechend kodiertes Signal über eine elektrische Signalleitung 11 an die Steuereinheit 5, welche wiederum über die Sensoreinheit 4 ein Lenkgegenmoment an der Gelenkwelle 6 und dem Lenkrad 3 erzeugt, um dem Fahrer ein realistisches Lenkgefühl und damit eine Rückmeldung über die momentane Fahrsituation zu geben.

Die Figuren 2 bis 6 zeigen die erfindungsgemäße Radaufhängungsvorrichtung 1 aus verschiedenen Perspektiven. Ein Achsschenkel 12 ist an seiner Oberseite 13 mit einem als MacPherson-Federbein ausgebildetes Federbein 14 verbunden, welches seinerseits am nicht gezeigten Fahrzeugchassis befestigt ist. Das Federbein 14 ist gegenüber der Vertikalen gekippt angeordnet und definiert eine Schwenkachse 15, um die der Achsschenkel 12 und das Fahrzeugrad 2 schwenkbar sind. Außerdem ermöglicht das Federbein 14 ein Einfedern des Achschenkels 12 und des Fahrzeugrades 2 in Richtung der Schwenkachse 15. Im Bereich seiner Unterseite 16 ist entweder der Achsschenkel 12 selbst oder ein mit dem Achsschenkel 12 verbundenes Gehäuse 28 mit einem Querlenker 17 verbunden, mit dem der Achsschenkel 12 oder das Gehäuse 28 am nicht gezeigten Fahrzeugchassis angelenkt ist.

Es ist ebenfalls denkbar und möglich, alternativ zu einem MacPherson-Federbein eine Doppel-Querlenker-Radaufhängung zu verwenden.

Zur Einzelradlenkung gehört ein aus Schneckenrad 18 und Schnecke 19 bestehendes Schneckenradgetriebe. Die Schneckenradachse des Schneckenrades 18 fällt mit der Schwenkachse 15 zusammen. Das Schneckenrad 18 ist außerdem mit dem Achsschenkel 12 drehfest verbunden, so dass eine Drehung des Schneckenrades 18 eine entsprechende Verschwenkung des Achsschenkels 12 und des Fahrzeugrades 2 bewirkt.

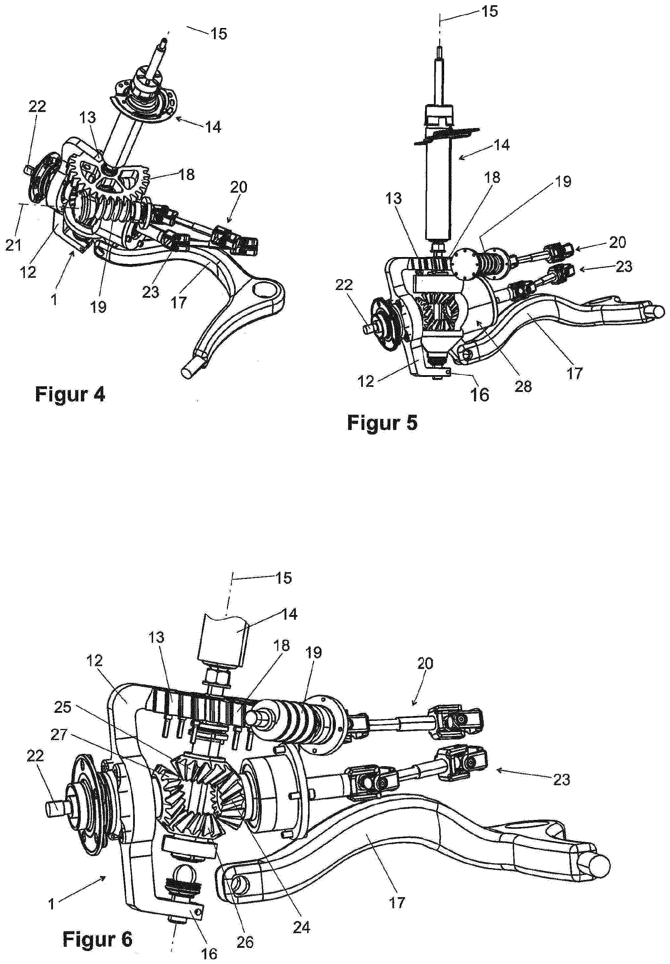

Das Schneckenrad 18 ist als Schneckenradsegment ausgestaltet. Wie man am besten in Figur 4 sehen kann, erstreckt sich das Schneckenrad 18 über einen Umfangsbereich von etwas mehr als 180°. Die außerhalb dieses Umfangsbereichs fallenden Schneckenradabschnitte sind zur Einsparung von Gewicht und Bauraum weggelassen worden.

Mit dem Schneckenrad 18 ist eine Schnecke 19 in Eingriff, die ihrerseits über eine als Gelenkwelle ausgestaltete Lenkantriebswelle 20 mit einem am nicht gezeigten Fahrzeugchassis angeordneten Elektromotor 9 verbunden ist. Mittels des Elektromotors 9 wird die Lenkantriebswelle 20 und damit die Schnecke 19 um ihre Schneckenachse 21 gedreht. Durch die sich drehende Schnecke 19 wird das Schneckenrad 18 um die Schwenkachse 15 gedreht und damit der Achsschenkel 12 und das am Achsschenkel angebrachte Fahrzeugrad 2 um die Schwenkachse 15 geschwenkt. In den Figuren 3 bis 6 ist vom Fahrzeugrad 2 nur eine Radachswelle 22 sichtbar.

Bei der gegebenen Auslegung des Schneckenrades 18 ist somit das Fahrzeugrad 2 um Lenkwinkel von -70° bis +90° aus seiner Neutralstellung bei Vorwärtsfahrt des Kraftfahrzeugs verschwenkbar. Dieser Schwenkbereich ist deutlich größer als der maximale Schwenkbereich von Lenkvorrichtungen, die Spurstangen verwenden.

Um mittels Drehung der Schnecke 19 am Schneckenrad 18 ein Lenkmoment zu erzeugen, muss das an der Schnecke 19 auftretende Gegenmoment abgestützt werden. Dadurch wird die Schnecke 19 nicht zusammen mit dem Schneckenrad 18 um die Schwenkachse 15 geschwenkt, sondern bleibt gegenüber der Schwenkachse 15 in einer festen Position.

Der Antrieb des gelenkten Fahrzeugrades 2 erfolgt mittels einer vom nicht gezeigten Fahrzeugmotor über ein nicht gezeigtes Getriebe angetriebenen Radantriebswelle 23, die als Gelenkwelle ausgestaltet ist, um den beim Einfedern des Fahrzeugrades 2 und des Achsschenkels 12 in Richtung der Schwenkachse 15 auftretenden Federweg auszugleichen. Um einen großen Schwenkbereich des Fahrzeugrades 2 um die Schwenkachse 15 zu ermöglichen, ist wirkungsmäßig zwischen der Radantriebswelle 23 und der angetriebenen Radachswelle 22 ein doppeltes Kegelradgetriebe 24, 25, 26, 27 angeordnet, welches zur Übertragung eines Antriebsmoments dient.

Das doppelte Kegelradgetriebe weist ein oberes Kegelrad 25 und ein unteres Kegelrad 26 auf, die drehfest miteinander verbunden, aber am Achsschenkel 12 drehbar gelagert sind. Die Radantriebswelle 23 ist mit einem inneren Kegelrad 24 verbunden, welches mit dem oberen Kegelrad 25 in Eingriff steht. Die angetriebene Radachswelle 22 ist mit einem äußeren Kegelrad 27 verbunden, welches mit dem unteren Kegelrad 26 in Eingriff steht. Somit wird das Antriebsmoment über die Radantriebswelle 23 zum inneren Kegelrad 24 und von diesem auf das obere Kegelrad 25 übertragen, welches drehfest mit dem unteren Kegelrad 26 verbunden ist und damit das Antriebsmoment über das untere Kegelrad 26 auf das äußere Kegelrad 27 überträgt, welches mit der Radachswelle 22 drehfest verbunden ist, wodurch das Antriebsmoment letztendlich auf das Fahrzeugrad 2 übertragen wird.

Durch die Anordnung des oberen Kegelrades 25 und des unteren Kegelrades 26 koaxial zur Schwenkachse 15 kann der Achsschenkel 12 in einem weiten Schwenkbereich um die Schwenkachse 15 geschwenkt werden, wobei das äußere Kegelrad 27 auf dem unteren Kegelrad 26 abrollt und sich dem inneren Kegelrad 24 annähert. Auf diese Weise sind Schwenkwinkel bis zu 90° in jede Richtung möglich, wobei auch bei derart extremen Schwenkwinkeln noch ein Antriebsmoment von der Radantriebswelle 23 über das doppelte Kegelradgetriebe 24, 25, 26, 27 auf die Radachswelle 22 übertragbar ist.

Um die Kegelräder 24 bis 27 des Kegelradgetriebes in ihrer korrekten Stellung zueinander zu fixieren, ist ein Gehäuse 28 vorgesehen, welches die Kegelräder 24 bis 27 und die Schnecke 19 lagert und nicht zusammen mit dem Achsschenkel 12 drehbar ist. Das Gehäuse 28 nimmt auch das an der Schnecke 19 auftretende Drehmoment auf. Der Achsschenkel 12 ist gegenüber dem Gehäuse 28 um die Schwenkachse 15 verschwenkbar. Das Gehäuse 28 bewegt sich andererseits zusammen mit dem Achsschenkel 12 beim Einfedern des Fahrzeugrades 2 in Richtung der Schwenkachse 15 und trägt damit zur ungefederten Masse bei. Der Querlenker 17 ist an der Unterseite des Gehäuses 28 angelenkt. In Figur 3 kann man den Anlenkpunkt 29 sehen.

Die Erfindung schafft somit eine Radaufhängungsvorrichtung 1 für ein angetriebenes und gelenktes Fahrzeugrad 2, die sehr kompakt und einfach aufgebaut ist und einen sehr großen Schwenkbereich des Fahrzeugrades 2 von -70° bis +90° gegenüber der Neutralstellung bei Geradeausfahrt des Kraftfahrzeugs ermöglicht.

### BEZUGSZEICHENLISTE

- 1: Radaufhängungsvorrichtung
- 2: Fahrzeugrad
- 3: Lenkrad
- 4: Sensoreinheit
- 5: Steuereinheit ECU
- 6: Lenkwelle
- 7: Signalleitung
- 8: Steuerleitung
- 9: Lenkmotor
- 10: Lenkmomentsensor
- 11: Signalleitung
- 12: Achsschenkel
- 13: Oberseite
- 14: Federbein
- 15: Schwenkachse
- 16: Unterseite
- 17: Querlenker
- 18: Schneckenrad
- 19: Schnecke
- 20: Lenkantriebswelle
- 21: Schneckenachse
- 22: Radachswelle
- 23: Radantriebswelle
- 24: inneres Kegelrad
- 25: oberes Kegelrad
- 26: unteres Kegelrad
- 27: äußeres Kegelrad
- 28: Gehäuse
- 29: Anlenkpunkt

## Patentansprüche

1. Radaufhängungsvorrichtung mit einer Einzelradlenkung für ein Kraftfahrzeug mit Antrieb der gelenkten Räder, mit einem am Fahrzeugchassis federnd aufgehängten Achsschenkel (12) zur drehbaren Lagerung eines Fahrzeugrades (2), wobei der Achsschenkel (12) mittels der Einzelradlenkung um eine Schwenkachse (15) schwenkbar ist, wobei die Einzelradlenkung ein Schneckengetriebe (18, 19) mit einem am Achsschenkel (12) drehfest und koaxial zur Schwenkachse (15) angeordneten Schneckenrad (18) aufweist, das mit einer Schnecke (19) in Eingriff steht, mittels der das Schneckenrad (18) um die Schwenkachse (15) drehbar ist und die über eine als Gelenkwelle ausgestaltete Lenkantriebswelle (20) durch einen am Fahrzeugchassis angeordneten Lenkmotor (9) antreibbar ist, wobei das gelenkte Fahrzeugrad (2) mit einem Antrieb gekoppelt ist, wobei der Antrieb mittels einer als Gelenkwelle ausgestalteten Radantriebswelle (23) erfolgt, wobei wirkungsmäßig zwischen der Radantriebswelle (23) und einer angetriebenen Radachswelle (22) des Fahrzeugrades (2) ein doppeltes Kegelradgetriebe (24, 25, 26, 27) angeordnet ist, **dadurch gekennzeichnet, dass** das Kegelradgetriebe (24, 25, 26, 27) und die Schnecke (19) in einem Gehäuse (28) angeordnet sind, das gegenüber der Schwenkachse (15) unverschwenkbar ist und mit dem Achsschenkel (12) in Richtung der Schwenkachse (15) federnd aufgehängt ist.

2. Radaufhängungsvorrichtung nach Anspruch 1, **dadurch gekennzeichnet, dass** das Schneckenrad (18) als Schneckenradsegment ausgestaltet ist.

3. Radbewegungsvorrichtung nach Anspruch 2, **dadurch gekennzeichnet, dass** das als Schneckenradsegment ausgebildete Schneckenrad (18) sich über einen Umfangsbereich zwischen 180° und 270° erstreckt.

4. Radaufhängungsvorrichtung nach Anspruch 1, **dadurch gekennzeichnet, dass** das doppelte Kegelradgetriebe (24, 25, 26, 27) zwei drehfest miteinander verbundene, am Achsschenkel (12) koaxial zur Schwenkachse (15) drehbar gelagerte Kegelräder (25, 26) aufweist, von denen ein oberes Kegelrad (25) mit einem mit der Radantriebswelle (23) drehfest verbundenen inneren Kegelrad (24) in Eingriff steht und ein unteres Kegelrad (26) mit einem mit der angetriebenen Radachswelle (22) drehfest verbundenen äußeren Kegelrad (27) in Eingriff steht, so dass ein Antriebsmoment von der Radantriebswelle (23) über das innere Kegelrad (24) auf das obere Kegelrad (25), von diesem auf das untere Kegelrad (26) und von Letzterem auf das äußere Kegelrad (27) und die Radachswelle (22) übertragbar ist.

5. Radaufhängungsvorrichtung nach Anspruch 1, **dadurch gekennzeichnet, dass** das Gehäuse (28) an seiner Unterseite mittels eines Querlenkers (17) am Fahrzeugchassis angelenkt ist.

## Claims

1. Wheel suspension device having single-wheel steering for a motor vehicle with driving of the steered wheels, having a steering knuckle (12) spring-suspended on the vehicle chassis for rotatably supporting a vehicle wheel (2), wherein the steering knuckle (12) can be pivoted about a pivot axis (15) by means of the single-wheel steering, wherein the single-wheel steering comprises a worm gear (18, 19) having a worm wheel (18), which is rotationally fixed to the steering knuckle (12) and arranged coaxially with the pivot axis (15), and which meshes with a worm (19), by means of which the worm wheel (18) can be rotated about the pivot axis (15) and which can be driven by a steering motor (9) arranged on the vehicle chassis by way of a steering drive shaft (20) in the form of an articulated shaft, wherein the steered vehicle wheel (2) is coupled to a drive, wherein the drive is provided by means of a wheel drive shaft (23) in the form of an articulated shaft, wherein a double bevel gear train (24, 25, 26, 27) is operatively arranged between the wheel drive shaft (23) and a driven wheel axle shaft (22) of the vehicle wheel (2), **characterized in that** the bevel gear train (24, 25, 26, 27) and the worm (19) are arranged in a housing (28), which is not capable of pivoting relative to the pivot axis (15) and is spring-suspended with the steering knuckle (12) in the direction of the pivot axis (15).

2. Wheel suspension device according to Claim 1, **characterized in that** the worm wheel (18) takes the form of a worm wheel segment.

3. Wheel movement device according to Claim 2, **characterized in that** the worm wheel (18) in the form of a worm wheel segment extends over a circumferential range between 180° and 270°.

4. Wheel suspension device according to Claim 1, **characterized in that** the double bevel gear train (24, 25, 26, 27) comprises two bevel gears (25, 26) rotationally fixed to one another and rotatably supported on the steering knuckle (12) coaxially with the pivot axis (15), of which an upper bevel gear (25) meshes with an inner bevel gear (24) rotationally fixed to the wheel drive shaft (23), and a lower bevel gear (26) meshes with an outer bevel gear (27) rotationally fixed to the driven wheel axle shaft (22), so that a drive torque can be transmitted from the wheel drive shaft (23) via the inner bevel gear (24) to the upper bevel gear (25) and from this to the lower bevel gear (26) and from the latter to the outer bevel gear (27) and the wheel axle shaft (22).

5. Wheel suspension device according to Claim 1, **characterized in that** the housing (28) on its underside is articulated on the vehicle chassis by means of a transverse link (17).

## Revendications

1. Dispositif de suspension de roue comprenant une direction individuelle des roues pour un véhicule automobile avec entraînement des roues directrices, comprenant une fusée d'essieu (12) suspendue à ressort sur le châssis du véhicule, pour le support à rotation d'une roue du véhicule (2), la fusée d'essieu (12) pouvant pivoter autour d'un axe de pivotement (15) au moyen de la direction individuelle des roues, la direction individuelle des roues présentant une transmission à vis sans fin (18, 19) avec une roue hélicoïdale (18) disposée de manière solidaire en rotation sur la fusée d'essieu (12) et coaxialement à l'axe de pivotement (15), laquelle est en prise avec une vis sans fin (19) au moyen de laquelle la roue hélicoïdale (18) peut tourner autour de l'axe de pivotement (15) et qui peut être entraînée, par le biais d'un arbre d'entraînement de direction (20) configuré sous forme d'arbre articulé, par un moteur de direction (9) disposé au niveau du châssis du véhicule, la roue directrice du véhicule (2) étant accouplée à un entraînement, l'entraînement se produisant au moyen d'un arbre d'entraînement de roue (23) configuré en tant qu'arbre articulé, une transmission à pignons coniques double (24, 25, 26, 27) étant disposée fonctionnellement entre l'arbre d'entraînement de roue (23) et un arbre d'essieu de roue entraîné (22) de la roue du véhicule (2), **caractérisé en ce que** la transmission à pignons coniques (24, 25, 26, 27) et la vis sans fin (19) sont disposées dans un boîtier (28) qui ne peut pas pivoter par rapport à l'axe de pivotement (15) et qui est suspendu à ressort avec la fusée d'essieu (12) dans la direction de l'axe de pivotement (15).

2. Dispositif de suspension de roue selon la revendication 1, **caractérisé en ce que** la roue hélicoïdale (18) est configurée sous forme de segment de roue hélicoïdale.

3. Dispositif de déplacement de roue selon la revendication 2, **caractérisé en ce que** la roue hélicoïdale (18) réalisée sous forme de segment de roue hélicoïdale s'étend sur une région périphérique comprise entre 180° et 270°.

4. Dispositif de suspension de roue selon la revendication 1, **caractérisé en ce que** la transmission à pignons coniques double (24, 25, 26, 27) présente deux pignons coniques (25, 26) connectés l'un à l'autre de manière solidaire en rotation, supportés à rotation sur la fusée d'essieu (12) coaxialement à l'axe de pivotement (15), dont un pignon conique supérieur (25) est en prise avec un pignon conique intérieur (24) connecté de manière solidaire en rotation à l'arbre d'entraînement de roue (23) et un pignon conique inférieur (26) est en prise avec un pignon conique extérieur (27) connecté de manière solidaire en rotation à l'arbre d'essieu de roue entraîné (22), de telle sorte qu'un couple d'entraînement puisse être transmis depuis l'arbre d'entraînement de roue (23) par le biais du pignon conique intérieur (24) au pignon conique supérieur (25), de celui-ci au pignon conique inférieur (26) et de ce dernier au pignon conique extérieur (27) et à l'arbre d'essieu de roue (22).

5. Dispositif de suspension de roue selon la revendication 1, **caractérisé en ce que** le boîtier (28) est articulé au niveau du châssis du véhicule au niveau de son côté inférieur au moyen d'un bras oscillant transversal (17).
